# EUROPEAN PATENT APPLICATION

(11) **EP 2 570 242 A2**
(43) Date of publication of application: **20.03.2013**
(21) Application number: 12182783.6
(22) Date of filing: 03.09.2012
(51) Int. Cl.: B25J 9/16

(54) **Robot system**

(30) Priority: 16.09.2011 JP 2011203258
(71) Applicant: Kabushiki Kaisha Yaskawa Denki, Kitakyushu-shi, Fukuoka 806-0004 (JP)
(72) Inventor: Ichimaru, Yuji, Kitakyushu-shi, Fukuoka 806-0004 (JP)
(74) Representative: Viering, Jentschura & Partner

(57) **Abstract**

A robot system includes: a projecting unit for projecting a slit light on a specified placement region and moving the slit light in a specified direction; an imaging unit for imaging the slit light moving on a work on the placement region; an estimated projection region determining unit for determining an estimated projection region such that the length of the estimated projection region in a direction substantially parallel to the moving direction grows larger toward the center of the image in the intersection direction; a projection position detecting unit for detecting a projection position of the slit light within the estimated projection region. The robot system further includes a robot for gripping the workpiece.

## Description

### BACKGROUND OF THE INVENTION

### Field of the Invention

An embodiment disclosed herein relates to a robot system.

### Description of the Related Art

Japanese Application Publication No. 2008-87074 discloses a robot system in which a task of picking up workpieces from a container maintaining the workpieces in disorder (in bulk) is automatically performed by a robot. In this robot system, the three-dimensional shape of bulk workpieces is measured and the grip target workpiece selected pursuant to the three-dimensional shape is picked up from the container by the robot.

In this regard, a light sectioning method is extensively used in measuring the three-dimensional shape. In the light sectioning method, a slit light (i.e., line-shaped light) projected toward the workpieces is moved in a specified moving direction. Images of the slit light moving on the workpieces are sequentially picked up a number of times by a camera.

Then, the respective pixels in the images thus taken are read one after another along the direction parallel to the moving direction of the slit light, thereby detecting the projection position of the slit light on the workpiece. Based on the positional relationship between three points, i.e., the projection position of the slit light on the workpiece, the light source position of the slit light and the reception position of the slit light received by the camera, the three-dimensional shape of the workpiece is measured under the principle of triangulation.

In the robot system stated above, the projection region of the slit light on the workpiece is estimated and the pixels corresponding to the estimated projection region are selectively read one after another along the moving direction of the slit light. This makes it possible to shorten the time required in detecting the projection position of the slit light on the workpiece.

However, in the conventional robot system for estimating the projection region of the slit light, no particular measure is considered to optimize the estimated projection region. For that reason, there exists a problem in that the speed and accuracy of picking up the workpiece performed by the robot may be reduced.

### Summary of the Invention

In view of the above, embodiments disclosed herein provide a robot system capable of optimizing an estimated projection region of slit light and eventually enhancing the speed and accuracy of picking up a workpiece performed by a robot.

In accordance with the aspect of the embodiments, there is provided a robot system including: a projecting unit for projecting a slit light on a specified placement region loaded with a work and for moving the slit light in a specified moving direction; an imaging unit for imaging, a number of times, the slit light moving on the work loaded on the placement region; an estimated projection region determining unit for determining an estimated projection region such that the estimated projection region extends across an image taken by the imaging unit in an intersection direction intersecting the moving direction and such that the length of the estimated projection region in a direction substantially parallel to the moving direction grows larger toward the center of the image in the intersection direction; a projection position detecting unit for detecting a projection position of the slit light within the estimated projection region; and a robot for gripping the workpiece based on the projection position detected by the projection position detecting unit.

In accordance with the aspect of the present invention, it is possible to provide a robot system capable of optimizing the estimated projection region of slit light and eventually enhancing the speed and accuracy of picking up a workpiece performed by a robot.

### Brief Description of the Drawings

The objects and features of the present invention will become apparent from the following description of embodiments, given in conjunction with the accompanying drawings, in which:
Fig. 1 is a schematic diagram showing components of a robot system in accordance with an embodiment;
Fig. 2 is a block diagram illustrating the configuration of a control device in accordance with the embodiment;
Fig. 3 is a view depicting a three-dimensional shape measuring method performed by a three-dimensional shape measuring unit in accordance with the embodiment;
Fig. 4 is an explanatory view illustrating a pre-scan in accordance with the embodiment;
Fig. 5A is a schematic view showing an image of a placement region taken when the pre-scan in accordance with the embodiment is carried out;
Fig. 5B is a schematic view showing an estimated projection region (area) in accordance with the embodiment;
Fig. 6A is an explanatory view illustrating a scan in accordance with the embodiment;
Fig. 6B is a schematic view showing an image taken when the scan in accordance with the embodiment is carried out and an estimated projection region (area) existing in the image;
Figs. 7A to 7C are explanatory views illustrating a method of detecting a projection position of slit light in left, central and right areas of an image;
Figs. 8A and 8B are schematic diagrams illustrating a brightness distribution diagram of the slit light in the longitudinal both ends and the longitudinal center of the slit light;
Figs. 9A to 9C are explanatory views illustrating the estimated projection regions (areas) provided on an image-by-image basis, Fig. 9A showing the estimated projection region when the position of the slit light lies at the X-axis negative side of the X-axis in the image, Fig. 9B showing the estimated projection region when the position of the slit light lies at the X-axis center in the image, and Fig. 9C showing the estimated projection region when the position of the slit light lies at the X-axis positive side in the image; and
Fig. 10 is a flowchart illustrating the sequence executed by a control device in accordance with the embodiment.

### DESCRIPTION OF THE EMBODIMENTS

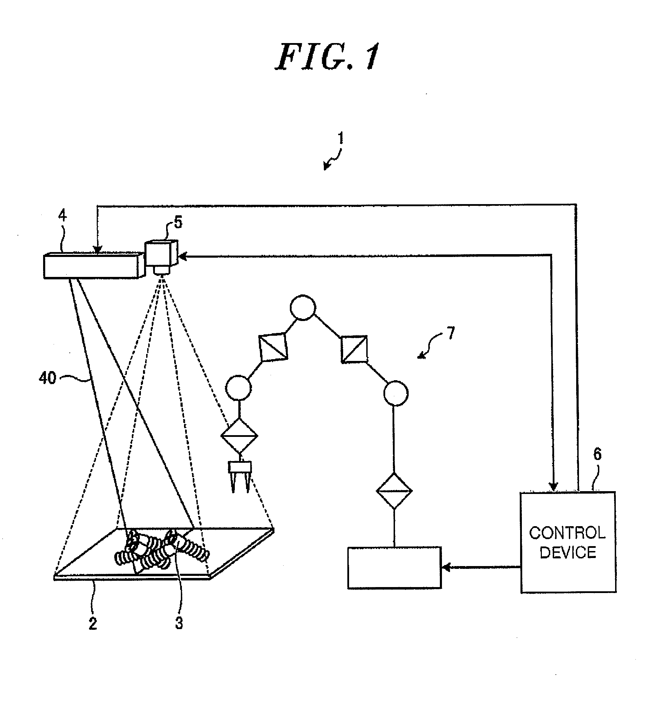

An embodiment of a robot system disclosed herein will now be described in detail with reference to the accompanying drawings which form a part hereof. The present disclosure is not limited to the embodiment to be described below. Fig. 1 is a schematic diagram showing components of a robot system in accordance with the embodiment.

As shown in Fig. 1, the robot system 1 includes a projecting unit 4, an imaging unit 5, a control device 6 and a robot 7. The projecting unit 4 is a light projecting unit for projecting a slit light 40 on a specified placement region 2 in which workpieces 3 are placed, and for moving the slit light 40 in a specific moving direction.

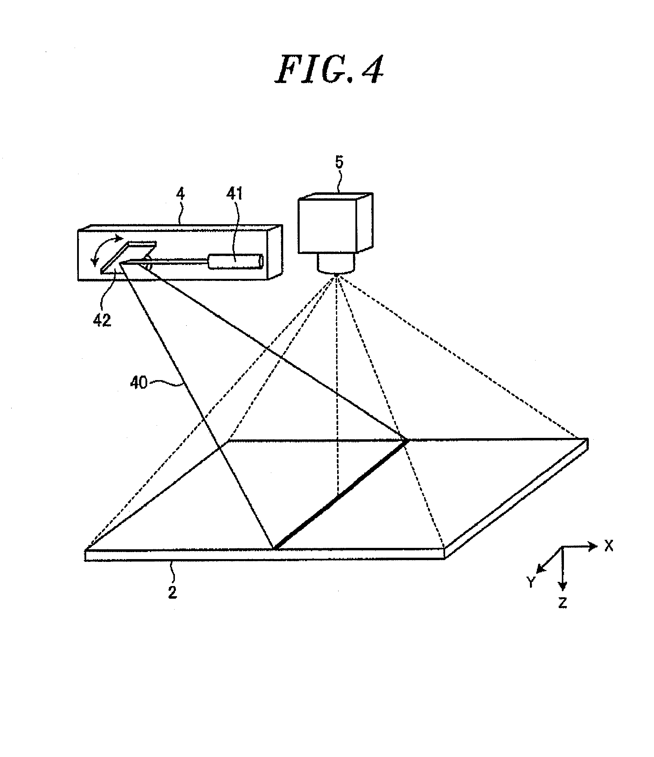

The projecting unit 4 performs the projection and movement of the slit light 40 under the control of the control device 6. The configuration of the projecting unit 4 will be described later with reference to Fig. 4. The imaging unit 5 is a camera for sequentially imaging, a number of times, the slit light 40 moving on the workpieces 3 placed on the placement region 2. The imaging unit 5 sequentially outputs the taken images to the control device 6 under the control of the control device 6.

The control device 6 is a device for generally controlling the overall operations of the robot system 1. The control device 6 outputs a slit light projecting command to the projecting unit 4 and outputs an imaging command to the imaging unit 5. Based on the images acquired from the imaging unit 5, the control device 6 measures the three-dimensional shape of the workpieces 3 and determines the positions and postures of the workpieces 3.

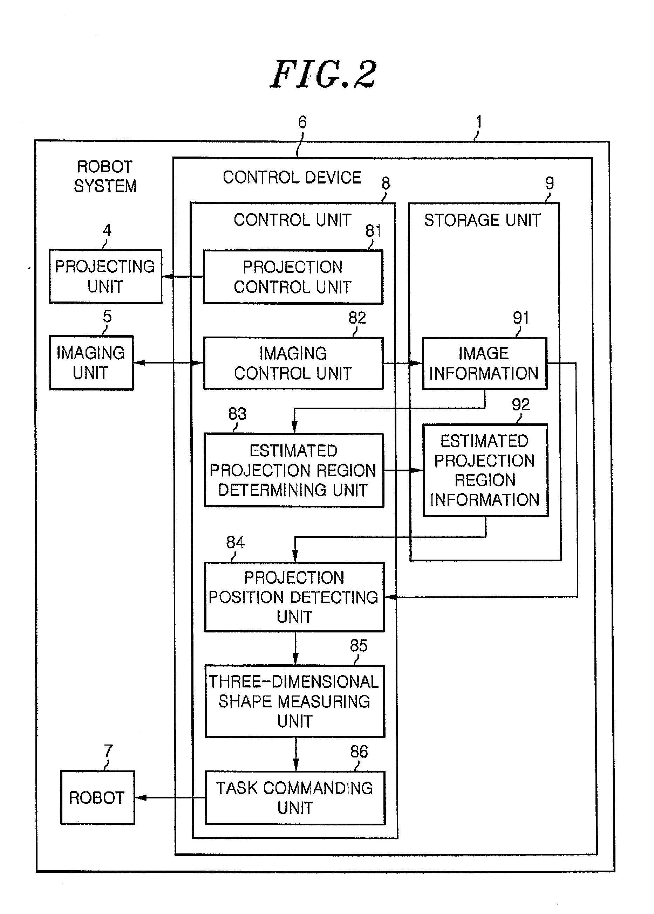

Then, the control device 6 selects a grip target workpiece 3 among the workpieces 3 whose positions and postures are determined. The control device 6 outputs to the robot 7 a task command for causing the robot 7 to perform a task of picking up the grip target workpiece 3 from the placement region 2. The configuration of the control device 6 will be described later with reference to Fig. 2.

Next, the configuration of the control device 6 will be described with reference to Fig. 2. Fig. 2 is a block diagram illustrating the configuration of the control device 6 in accordance with the present embodiment. As shown in Fig. 2, the control device 6 is connected to the projecting unit 4, the imaging unit 5 and the robot 7 to generally control the overall operations of the robot system 1. The control device 6 includes a control unit 8 and a storage unit 9.

The control unit 8 is an operation processing unit including a CPU (Central Processing Unit), a memory and the like. The control unit 8 includes a projection control unit 81, an imaging control unit 82, an estimated projection region determining unit 83, a projection position detecting unit 84, a three-dimensional shape measuring unit 85, a task commanding unit 86 and the like.

The storage unit 9 is an information storing device such as a hard disk drive or a flash memory. The storage unit 9 stores image information 91 and estimated projection region information 92.

The projection control unit 81 is a processing unit for outputting a specific command to the projecting unit 4 and controlling the operation of the projecting unit 4 when performing a pre-scan and a scan to be described later. The term "pre-scan" used herein refers to a process by which the slit light 40 is projected on the placement region 2 not loaded with the workpieces 3 thereon and is moved, e.g., from the left end of the placement region 2 to the right end thereof. The term "scan" used herein refers to a process by which the slit light 40 is projected on the placement region 2 loaded with the workpieces 3 and is moved in a specific moving direction.

The imaging control unit 82 is a processing unit for outputting a specific command to the imaging unit 5 to control the operation of the imaging unit 5 when the projection of the slit light 40 is performed by the projecting unit 4. Responsive to the command inputted from the imaging control unit 82, the imaging unit 5 sequentially images the slit light 40 moving on the placement region 2 and the workpieces 3 placed on the placement region 2 a number of times. The imaging control unit 82 sequentially acquires image information 91 on the respective images taken by the imaging unit 5 and stores the image information 91 in the storage unit 9.

The estimated projection region determining unit 83 is a processing unit for determining an estimated projection region to be projected with the slit light 40 during the scan. The estimated projection region determining unit 83 acquires image information 91 corresponding to the images taken during the pre-scan from the image information 91 stored in the storage unit 9 and determines an estimated projection region based on the image information 91 thus acquired.

The estimated projection region determining unit 83 determines the estimated projection region such that the estimated projection region extends across the image in the intersection direction intersecting (e.g., intersecting by a right angle) the moving direction of the slit light 40 and such that the length of the estimated projection region in the direction parallel to the moving direction of the slit light 40 grows larger toward the center of the image in the intersection direction. The order of determining the estimated projection region will be described later with reference to Figs. 4 to 6B.

Further, "parallel" in the present embodiment is not mathematical and may include an error in practice, such as a tolerance, an installation error or the like.

The estimated projection region determining unit 83 have the storage unit 9 store the estimated projection region information 92 indicative of the decided estimated projection region. At this time, the estimated projection region determining unit 83 may cause the storage unit 9 to store the estimated projection region information 92 corresponding to a plurality of images sequentially taken by the imaging unit 5 while the scan is performed once.

The projection position detecting unit 84 is a processing unit for detecting the projection position of the slit light 40 in each of the images taken by the imaging unit 5. The projection position detecting unit 84 acquires the image information 91, which corresponds to the image taken during the scan, and the estimated projection region information 92 from the storage unit 9.

Based on the image information 91 and the estimated projection region information 92, the projection position detecting unit 84 sequentially reads the pixels included in the estimated projection region of each image in the direction parallel to the moving direction of the slit light 40. Then, the projection position detecting unit 84 detects the pixels having the brightness equal to or higher than a specific threshold value or the pixels having the highest brightness values in respective lines in a direction parallel to the moving direction of the slit light 40 as the projection position of the slit light 40 in the image and outputs the detection result to the three-dimensional shape measuring unit 85.

Based on the positional relationship between three points, i.e., the projection position of the slit light 40 inputted from the projection position detecting unit 84, the position of the projecting unit 4 and the position of the imaging unit 5, the three-dimensional shape measuring unit 85 measures the three-dimensional shape of the workpieces 3 under the principle of triangulation.

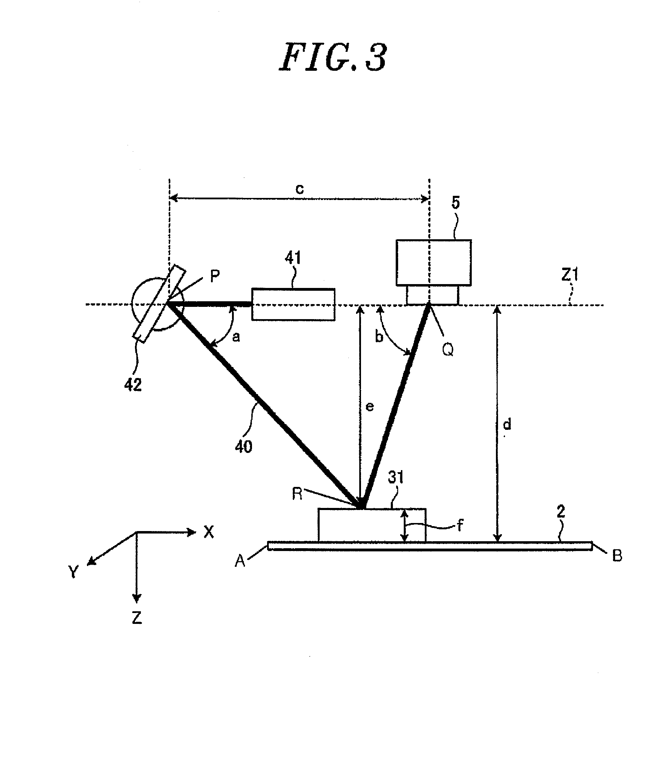

A method of measuring the three-dimensional shape of the workpiece 3 with the three-dimensional shape measuring unit 85 will now be briefly described with reference to Fig. 3. Fig. 3 is a view depicting a three-dimensional shape measuring method performed by the three-dimensional shape measuring unit 85 in accordance with the present embodiment. In this regard, description will be made on an instance where the three-dimensional shape of a rectangular parallelepiped workpiece 31 is measured.

As shown in Fig. 3, the projecting unit 4 of the robot system 1 includes a light source 41 for outputting slit light 40 and a mirror 42 for reflecting the slit light 40 outputted from the light source 41 and projecting the slit light 40 on the placement region 2. As the reflection position of the slit light 40 is changed by the rotation of the mirror 42, the slit light 40 is moved on the placement region 2 in a specified moving direction (e.g., toward the X-axis positive side in Fig. 3 from A to B). The X-axis, the Y-axis and the Z-axis in Fig. 3 constitute a rectangular coordinate system in which the respective axes are orthogonal to one another.

In the robot system 1 stated above, the mirror 42 and the imaging unit 5 are arranged so that the reflection position of the slit light 40 in the mirror 42 and the reception position of the slit light 40 in the imaging unit 5 can lie on one and the same plane (hereinafter referred to as "reference plane Z1") parallel to the placement region 2

The three-dimensional shape measuring unit 85 calculates an irradiation angle a of the slit light 40 with respect to the workpiece 31 based on the rotation angle of the mirror 42. In addition, the three-dimensional shape measuring unit 85 calculates a reception angle b of the slit light 40 with respect to the imaging unit 5 based on the projection position of the slit light 40 in the image.

In this connection, the distance c from the reflection position P of the slit light 40 in the mirror 42 to the reception position Q of the slit light 40 in the imaging unit 5 is known. Likewise, the distance d from the reference plane Z1 to the placement region 2 is known.

Using the distance c from the reflection position P in the mirror 42 to the reception position Q in the imaging unit 5, the irradiation angle a of the slit light 40 and the reception angle b of the slit light 40, the three-dimensional shape measuring unit 85 can calculate the distance e from the reference plane Z1 to the projection position R of the slit light 40 under the principle of triangulation.

Thus, the three-dimensional shape measuring unit 85 can calculate the height f of the workpiece 31 by subtracting the distance e from the reference plane Z1 to the projection position R of the slit light 40 from the distance d from the reference plane Z1 to the placement region 2. Accordingly, the three-dimensional shape measuring unit 85 can determine the three-dimensional shape of the workpiece 31 by calculating the height f with respect to the respective portions of the workpiece 31.

In the present embodiment, the reception position Q in the X-Y plane lies at the center of the placement region 2. The position of the reflection surface of the mirror 42 in the X-Y plane lies at the center of the placement region 2 in the Y-direction and at the X-axis negative side of the X-axis negative end of the placement region 2.

Referring back to Fig. 2, the configuration of the control unit 8 will be described again. The following description will be made on the assumption that the workpieces 3 shown in Fig. 1 are screws. The three-dimensional shape measuring unit 85 outputs the information on the three-dimensional shape of the workpieces 3 to the task commanding unit 86. The task commanding unit 86 is a processing unit for controlling the operation of the robot 7 by outputting a specified command to the robot 7.

Based on the information inputted from the three-dimensional shape measuring unit 85, the task commanding unit 86 determines the positions and postures of the workpieces 3 stacked on the placement region 2 in bulk and selects a grip target workpiece 3. Then the task commanding unit 86 outputs, to the robot 7, a command for allowing the robot 7 to perform a task of picking up the selected workpiece 3 from the placement region 2.

Next, an order of determining an estimated projection region 11 will be described with reference to Figs. 4 to 6B.

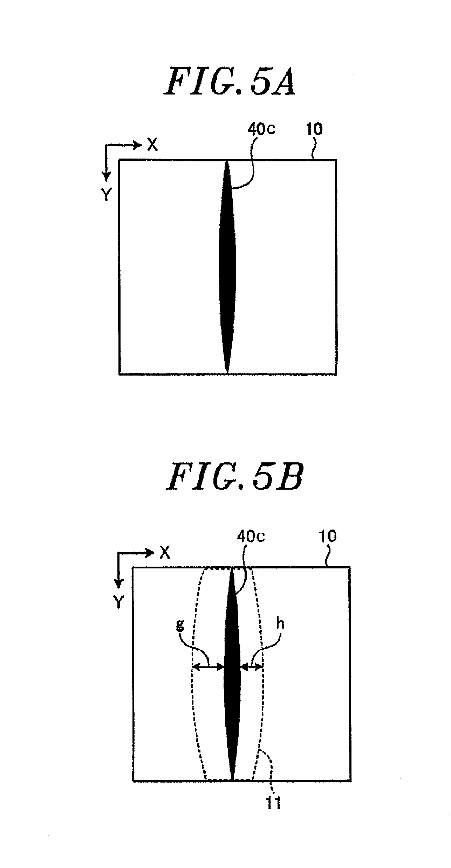

Fig. 4 is an explanatory view illustrating a pre-scan in accordance with the present embodiment. Fig. 5A is a schematic view showing the image 10 which includes, e.g., a slit light 40c projected on the center position of the placement region 2 in the X-axis direction among the slit lights 40 taken when the pre-scan in accordance with the present embodiment is carried out. Fig. 5B is a schematic view showing the estimated projection region 11 of the slit light 40c in accordance with the present embodiment.

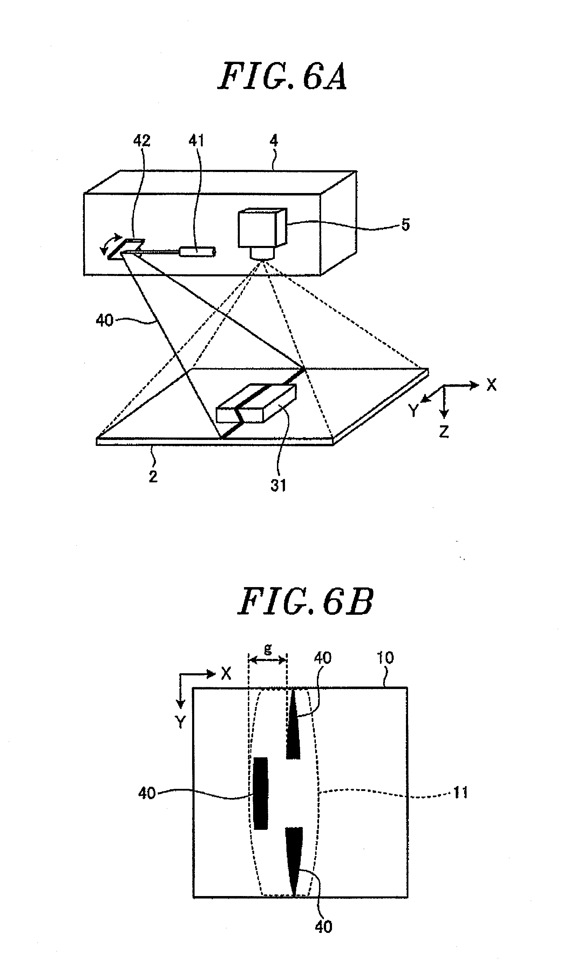

Further, Fig. 6A is an explanatory view illustrating the scan in accordance with the present embodiment. Fig. 6B is a schematic view showing the image 10 taken when the scan in accordance with the present embodiment is carried out and the estimated projection region 11 in the image 10.

In the robot system 1, when the task of picking up the workpiece 3 is carried out by the robot 7, the pre-scan on the placement region 2 is performed in advance by the slit light 40. In the robot system 1, the estimated projection region 11 (see Fig. 5B) of the slit light 40 to be projected when the workpieces 3 are actually scanned by the slit light 40 is determined pursuant to the result of the pre-scan.

More specifically, as shown in Fig. 4, the projecting unit 4 performs the pre-scan in the X-axis direction by allowing the mirror 42 to reflect the slit light 40 outputted from the light source 41 and then projecting the slit light 40 on the placement region 2 not loaded with the workpieces 3 to spread to the Y-axis both ends of the placement region 2.

During the pre-scan, the imaging unit 5 takes images 10 of the slit light 40 projected on the placement region 2 at regular intervals. The imaging unit 5 receives the slit light 40 reflected by the placement region 2 in the position just above the placement region 2 (at the Z-axis negative side) to take the image 10 of the slit light 40.

At this time, the slit light 40 reflected by the placement region 2 spreads and is moved toward the imaging unit 5. In this regard, the distance from the slit light 40 to the imaging unit 5 grows shorter as the reflection point comes closer to the longitudinal center of the slit light 40 (in the direction parallel to the Y-axis). The distance from the slit light 40 to the imaging unit 5 grows longer as the reflection point comes closer to the longitudinal both ends of the slit light 40.

Therefore, the slit light 40 further spreads until the reception of the slit light 40 by the imaging unit 5 as the reflection point comes closer to the longitudinal both ends of the slit light 40. This leads to a decrease in the quantity of the slit light 40 received by the imaging unit 5. Accordingly, if the slit light 40 shown in Fig. 4 is imaged by the imaging unit 5, the width of the slit light 40c of the image 10 in the direction parallel to the X-axis grows larger from the both ends of the slit light 40c toward the center of the slit light 40c in the direction parallel to the Y-axis as shown in Fig. 5A.

In other words, the slit light 40c of the image 10 does not have a flat shape but have a bulging shape because the width of the slit light 40c in the X-axis direction grows larger (i.e., the width of the slit light 40c becomes wider) from the longitudinal both ends toward the longitudinal center.

Therefore, as shown in Fig. 5B, the estimated projection region determining unit 83 determines the estimated projection region 11 so that the slit light 40c of the image 10 can be included in the estimated projection region 11. The width of the estimated projection region 11 is larger than the width of the slit light 40c. Just like the slit light 40c, the estimated projection region 11 has a bulging shape.

More specifically, the estimated projection region determining unit 83 determines, as the estimated projection region 11, the barrel-shaped region which extends across the image 10 in the intersection direction (Y-axis direction) intersecting the moving direction of the slit light 40c (X-axis direction) and which has an X-axis direction width growing larger toward the Y-axis direction center of the image 10.

At this time, the estimated projection region determining unit 83 determines a length (width) g from the X-axis negative-side edge of the slit light 40c taken during the pre-scan to the X-axis negative-side edge of the estimated projection region 11 by taking into account the Z-axis direction length of the workpieces 3 (the estimated maximum height of the workpieces 3 which is estimated when the workpieces 3 are placed with no overlap).

Moreover, the estimated projection region determining unit 83 determines a length h shorter than the length g as the length (width) h from the X-axis positive-side edge of the slit light 40c to the X-axis positive-side edge of the estimated projection region 11.

As an example, description will now be made on a case where the slit light 40 is projected on a rectangular parallelepiped workpiece 31 as shown in Fig. 6A and the image of the slit light 40 is taken. In this case, as shown in Fig. 6B, the slit light 40 projected on the top surface of the workpiece 31 is deviated toward the X-axis negative side from the slit light 40 projected on the placement region 2 by a distance corresponding to the Z-axis direction length (height) of the workpiece 31.

Accordingly, the estimated projection region determining unit 83 determines the length g from the X-axis negative-side edge of the slit light 40 to the X-axis negative-side edge of the estimated projection region 11 by adding a specified margin to the deviation distance in the X-axis negative-side of the slit light 40 corresponding to the estimated maximum height of the workpiece 31.

Depending on the irregular reflection of the slit light 40 or the imaging conditions, it is sometimes the case that, when scanning the workpiece 31, the slit light 40 is projected on the position deviated toward the X-axis positive side from the projection position of the slit light 40 imaged during the pre-scan. In this case, however, it is less likely that the deviation amount (the degree of deviation toward the X-axis positive side) becomes greater than the length g.

Therefore, the estimated projection region determining unit 83 determines the length h shorter than the length g as the length (width) h from the X-axis positive-side edge of the slit light 40 to the X-axis positive-side edge of the estimated projection region 11.

The description made above is directed to a case where the length g is determined on the assumption that the workpieces 31 are irregularly placed on the placement region 2 with no overlap. In the event that the workpieces 3 such as screws or the like are staked on the placement region 2 in bulk in an overlapping state, the length g is further increased in view of the height of the workpieces 3 overlapping with one another.

Taking into account the fact that the width of the slit light 40 tends to grow larger from the longitudinal both ends toward the center of the slit light 40, the estimated projection region determining unit 83 determines, as the estimated projection region 11, the barrel-shaped region in which the X-axis direction length (width) of the estimated projection region 11 grows larger toward the Y-axis direction center. Then, the estimated projection region determining unit 83 allows the storage unit 9 to store the estimated projection region information 92 indicative of the estimated projection region 11 thus determined.

The bulging shape of the contour of the estimated projection region 11 may not coincide with the bulging shape of the contour of the slit light 40. In other words, the estimated projection region 11 may have an arbitrary barrel-like shape in which the X-axis direction length (width) grows larger toward the Y-axis direction center.

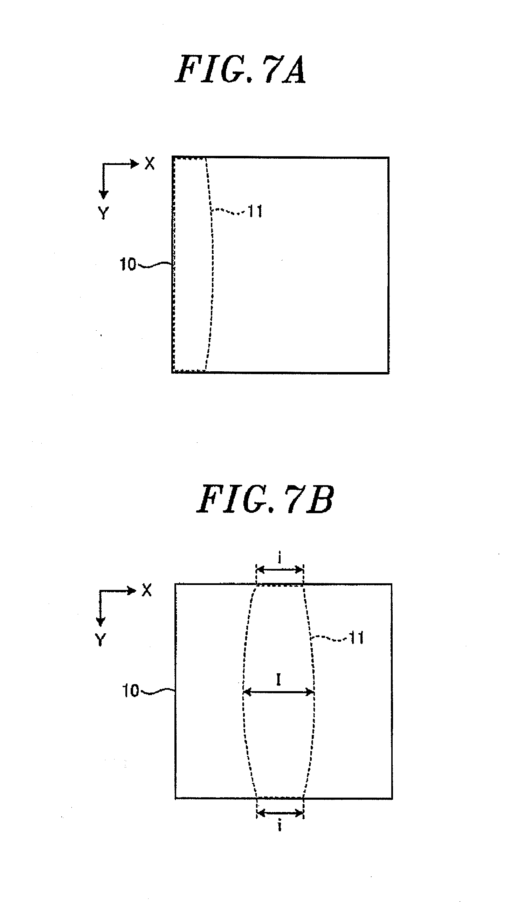

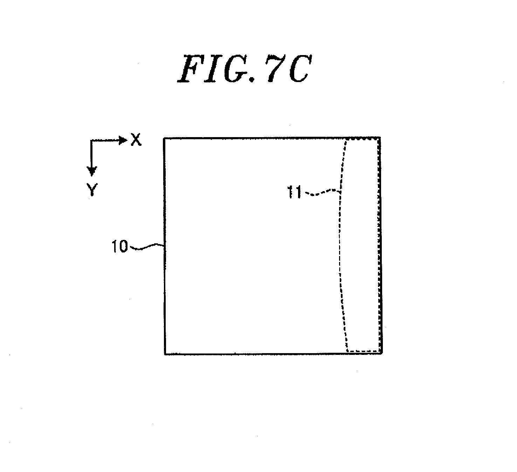

Next, a method of detecting the projection position of the slit light 40 by the projection position detecting unit 84 will be described with reference to Figs. 7A to 7C. Figs. 7A to 7C are explanatory views illustrating a method of detecting the projection position of the slit light 40 in the left, central and right areas of an image in accordance with the present embodiment.

Description will be made herein on a case where the scan of the workpieces 3 is performed while moving the slit light 40 on the placement region 2 toward the X-axis direction positive-side at a constant speed. In this case, the projecting unit 4 causes the mirror 42 to reflect the slit light 40 emitted from the light source 41 and then to project the slit light 40 on the placement region 2 loaded with the workpieces 3.

During the projection, the projecting unit 4 performs the scan of the workpieces 3 by rotating the mirror 42 so as to move the slit light 40 on the placement region 2 in a specified direction, e.g., from the left end to the right end of the placement region 2 in the X-axis positive direction. Then, the imaging unit 5 sequentially takes, a number of times, an image 10 of the slit light 40 moving on the placement region 2 in the X-axis positive direction at regular intervals.

The projection position detecting unit 84 detects the projection position of the slit light 40 from the image 10 taken by the imaging unit 5. In this regard, the projection position detecting unit 84 acquires the image information 91 and the estimated projection region information 92 from the storage unit 9. Based on the estimated projection region information 92, the projection position detecting unit 84 sets an estimated projection region 11 in each of the images 10 and detects the projection position of the slit light 40 within the estimated projection region 11.

More specifically, the projection position detecting unit 84 estimates the projection position of the slit light 40 in each of the images 10 based on the moving speed of the slit light 40 in the placement region 2. Then, as shown in Figs. 7A to 7C, the projection position detecting unit 84 sets an estimated projection region 11 in each of the images 10 so that the estimated projection region 11 can include the estimated projection position. For example, the projection position of the slit light 40 moving on the plane including the placement region 2 in which the workpieces 3 do not exist is estimated with respect to each of the images 10. Then, the estimated projection region 11 is set so that the estimated position of the slit light 40 coincides with the projection position of the slit light 40 in the estimated projection region 11.

Then, the projection position detecting unit 84 selectively and sequentially reads the pixels, which are included in the estimated projection region 11 set in each of the images 10, from one Y-axis end (i.e., the top end of the image in Fig. 7A) to the other Y-axis end (i.e., the bottom end of the image in Fig. 7A) in the direction parallel to the X-axis. The projection position detecting unit 84 detects the positions of the pixels having the brightness equal to or higher than a specified threshold value or those of the pixels having the highest brightness values on the respective lines in the direction parallel to the X-axis as the projection position of the slit light 40 in the image 10.

In this manner, the projection position detecting unit 84 does not read all the pixels of the image 10 but selectively reads the pixels existing within the estimated projection region 11 estimated in advance, thereby detecting the projection position of the slit light 40. It is therefore possible to reduce the processing time required in detecting the projection position.

In conformity with the shape of the slit light 40 appearing in the image 10, the estimated projection region 11 is optimized such that the length (width) thereof in the direction parallel to the X-axis grows larger from the longitudinal two ends toward the center.

As a result, the projection position detecting unit 84 can read a necessary and sufficient number of pixels when detecting the projection position of the slit light 40 in the longitudinal central portion (indicated by "I" in Fig. 7B) wider than the longitudinal two end portions (indicated by "i" in Fig. 7B). This makes it possible to prevent omission in detecting the slit light 40.

When detecting the projection positions of the slit light 40 in the longitudinal two end portions, the projection position detecting unit 84 can detect the projection position of the slit light 40 without having to read an unnecessarily large number of pixels. This makes it possible to effectively reduce the detection time of the slit light 40.

The projection position detecting unit 84 detects the projection position of the slit light 40 based on a brightness distribution diagram of the slit light 40 in the image 10. This makes it possible to further increase the detection accuracy of the projection position of the slit light 40 in the image 10.

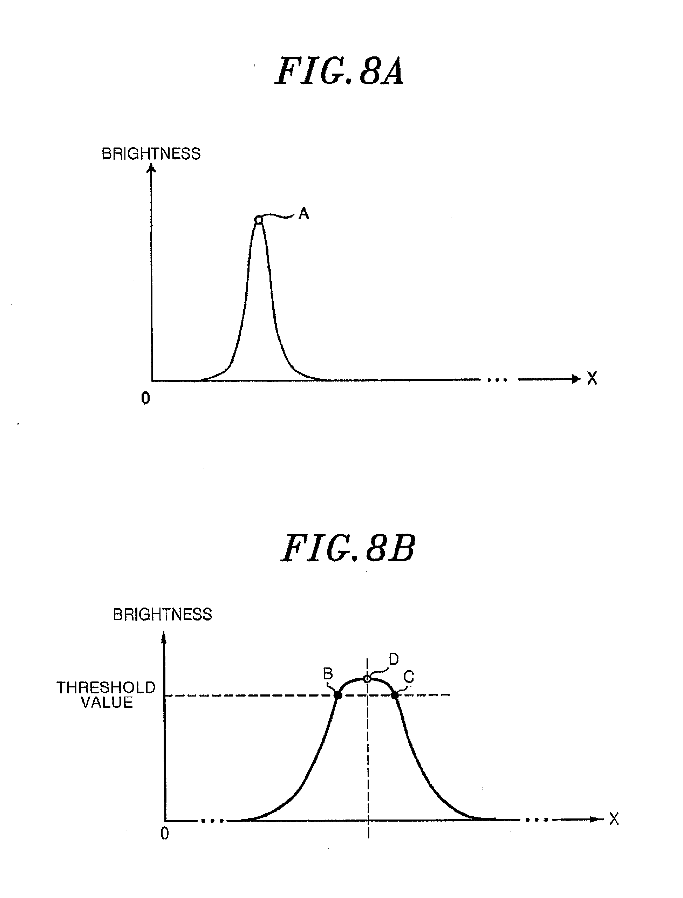

Next, a method of detecting the projection position of the slit light 40 based on the brightness distribution diagram (histogram) will be described with reference to Figs. 8A and 8B. Figs. 8A and 8B are schematic diagrams illustrating the brightness distribution diagrams on the pixels of the respective lines in the direction parallel to the X-axis in the longitudinal both ends and the longitudinal center of the slit light 40, respectively.

As shown in Fig. 8A, when detecting the projection positions of the slit light 40 in the longitudinal both ends, the projection position detecting unit 84 detects the position of a pixel A having, e.g., a peak brightness value as the projection position of the slit light 40 on the corresponding line.

As shown in Fig. 8B, when detecting the projection position of the slit light 40 in the longitudinal center, there may be a case in which a plurality of pixels having similarly high brightness values exists on the same line in the direction parallel to the X-axis because the length (width) of the slit light 40 in the direction parallel to the X-axis is longer (wider) in the longitudinal center of the slit light 40 than that in the longitudinal both ends of the slit light 40. In this case, the detection accuracy of the projection position may be reduced due to unclearness of identifying the pixel having a peak brightness value.[0073] Accordingly, when detecting the projection position of the slit light 40 in the longitudinal center, the projection position detecting unit 84 detects the projection position by using, e.g., a threshold value preset by the brightness distribution diagram on the pixels of each line in the direction parallel with the X-axis.

In this case, the projection position detecting unit 84 discerns, e.g., a pixel D positioned at the midpoint between a pair of pixels B and C in the image 10, the brightness of the pair of pixels B and C being equal to the threshold value (or being approximate to the threshold value, when no pair of pixels equal to the threshold value exists). Then, the projection position detecting unit 84 detects, as the projection position of the slit light 40, the midpoint pixel D thus discerned on the corresponding line.

Further, when the brightness of the midpoint pixel D is lower than the threshold value, a pixel, which is the closest pixel to the midpoint pixel D and of which brightness is not lower than the threshold value, is detected as the projection position of the slit light 40.

By using the brightness distribution diagram on the pixels in this manner, the projection position detecting unit 84 can accurately detect the projection position of the slit light 40.

Further, when the projection position is detected in the longitudinal center of the slit light 40, another method may be used as substitute for the method described by referring to Fig. 8B. For example, different weights are assigned to the pixels in the direction parallel to the X-axis depending on the positions of the pixels and a pixel having the highest brightness value among the pixels, the brightness values of which have been applied with the weights, is detected as the projection position of the slit light.

Furthermore, detecting the position of the pixel having the peak brightness value on each line in the direction parallel to the X-axis as the projection position of the slit light, which is described above by referring to Fig. 8A, is applied with respect to regions from the longitudinal both ends of the estimated projection region to predetermined locations existing on the way to the longitudinal center within the estimated projection region on the placement position 2. And, detecting, as the projection position of the slit light, the pixel having the brightness value equal to or higher than the threshold value on each line in the direction parallel to the X-axis, which is described above by referring to Fig. 8B, is applied with respect to the remaining region within the estimated projection region.

While the description made above is directed to a case where the projection position detecting unit 84 detects the projection position of the slit light 40 by sequentially moving the estimated projection region 11 of a specific shape and size toward the X-axis positive side in the order of the images 10 taken, the estimated projection region 11 may be provided in each of the images 10.

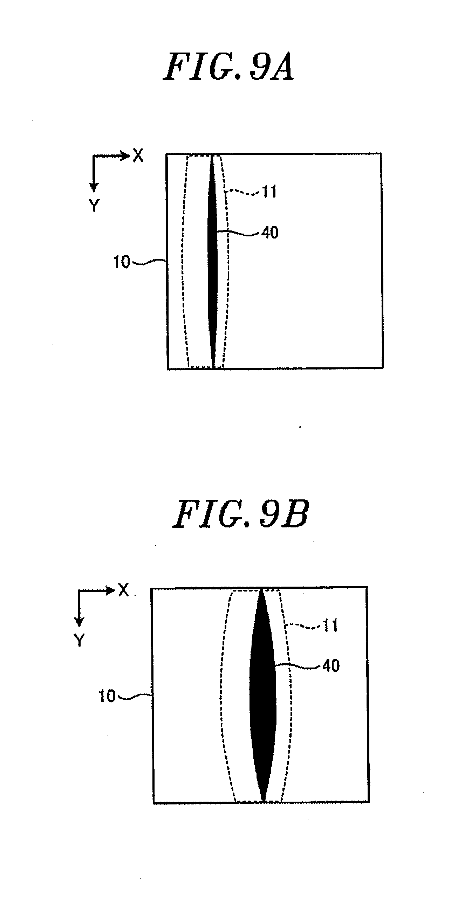

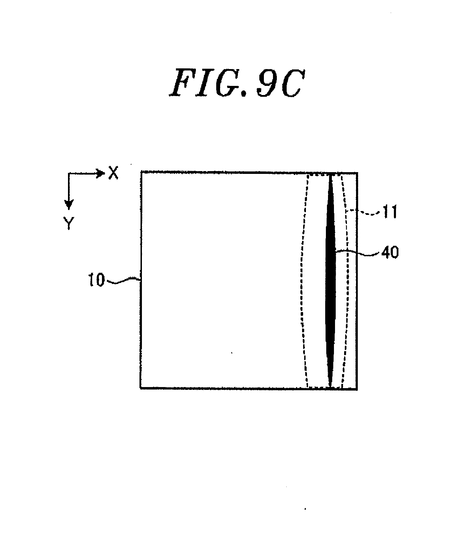

Next, a method of providing the estimated projection region 11 in each of the images 10 will be described with reference to Figs. 9A to 9C. Fig. 9A shows the estimated projection region when the position of the slit light 40 lies at the X-axis negative side in the image 10, Fig. 9B shows the estimated projection region when the position of the slit light 40 lies at the X-axis center in the image 10, and Fig. 9C shows the estimated projection region when the position of the slit light 40 lies at the X-axis positive side in the image 10.

As shown in Figs. 9A to 9C, the length (width) of the slit light 40 in the direction parallel to the X-axis tends to grow larger as the X-axis direction position of the slit light 40 in the image 10 comes closer to the center. Accordingly, when the estimated projection region 11 is provided in each of the images 10, the estimated projection region determining unit 83 determines the estimated projection region 11 in such a way that the length of the estimated projection region 11 in the direction parallel to the X-axis grows larger toward the X-axis center of the image 10.

Then, the estimated projection region determining unit 83 allows the storage unit 9 to store the estimated projection region information 92 corresponding to the estimated projection region 11 on an image-by-image basis. As a consequence, using the estimated projection region information 92 stored on an image-by-image basis, the projection position detecting unit 84 can detect the projection position of the slit light 40 by setting the estimated projection region 11 having a size corresponding to the projection position of the slit light 40 in the image 10.

Therefore, if the slit light 40 is positioned near the X-axis negative side or positive side portion in the image 10 as shown in Figs. 9A and 9C, the projection position detecting unit 84 can set a necessary minimum estimated projection region 11, thereby reducing the time required in detecting the projection position.

Since the estimated projection region 11 is minimized, it is possible to reduce generation of a slit light detection error caused by the ambient light other than the slit light 40. As a result, the robot system 1 can reduce generation of a workpiece detection error, thereby restraining the robot 7 from performing a gripping operation in a wrong position.

On the other hand, when the slit light 40 is positioned at the X-axis center in the image 10, the projection position detecting unit 84 can set an estimated projection region 11 having a necessary and sufficient width as shown in Fig. 9B, thereby preventing omission of detection of the projection position.

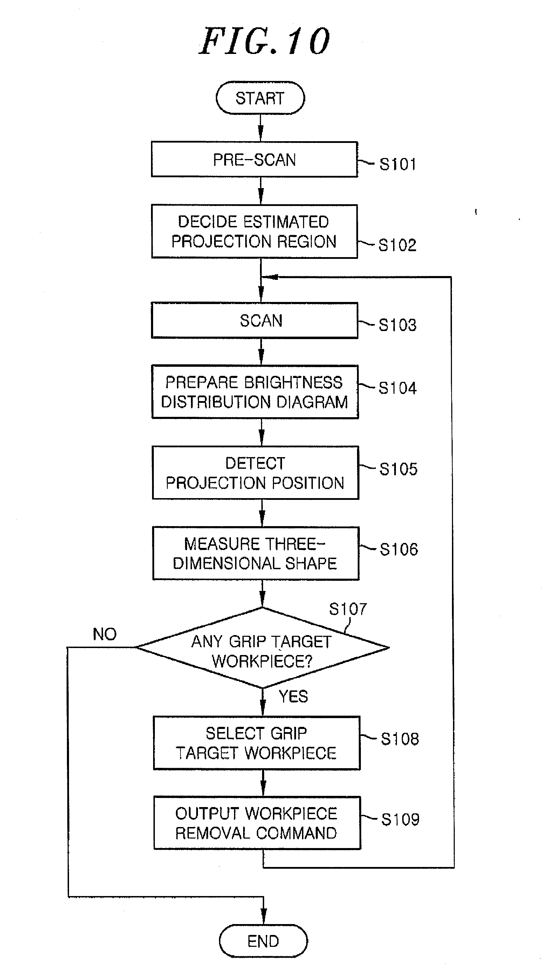

Next, the processing executed by the control unit 8 in the control device 6 will be described with reference to Fig. 10. As shown in Fig. 10, the control unit 8 allows the projecting unit 4 to perform a pre-scan in step S101.

At this time, the projection control unit 81 outputs to the projecting unit 4 a command instructing the projecting unit 4 to project the slit light 40 on the placement region 2 not loaded with the workpieces 3 and to move (pre-scan) the slit light 40 on the placement region 2 in the direction parallel to the X-axis. Moreover, the imaging control unit 82 outputs to the imaging unit 5 a command instructing the imaging unit 5 to take an image 10 of the slit light 40 moving on the placement region 2. Then, the imaging control unit 82 acquires the image information 91 on the taken image 10 from the imaging unit 5 to store the image information 91 in the storage unit 9.

Subsequently, the estimated projection region determining unit 83 determines an estimated projection region 11 (see Fig. 5B) using the image information 91 taken during the pre-scan in step S102. Then, the estimated projection region determining unit 83 allows the storage unit 9 to store the estimated projection region information 92 indicative of the estimated projection region 11 thus decided.

Thereafter, the control unit 8 begins to perform a scan in step S103. At this time, the projection control unit 81 outputs to the projecting unit 4 a command instructing the projecting unit 4 to project the slit light 40 on the placement region 2 loaded with the workpieces 3 and instructing the projecting unit 4 to move (scan) the slit light 40 on the placement region 2 in the direction parallel to the X-axis. Moreover, the imaging control unit 82 outputs to the imaging unit 5 a command instructing the imaging unit 5 to take an image 10 of the slit light 40 moving on the placement region 2. Then, the imaging control unit 82 acquires the image information 91 on the taken image 10 from the imaging unit 5 and stores the image information 91 in the storage unit 9.

Then, using the estimated projection region information 92 stored in the storage unit 9, the projection position detecting unit 84 sets the estimated projection region 11 (see Figs. 7A to 7C) in each of the images 10. The projection position detecting unit 84 prepares a brightness distribution diagram on the pixels included in the estimated projection region 11 by selectively and sequentially scanning the pixels of the estimated projection region 11 from one Y-axis end (i.e., the top end of the image in Fig. 7A) to the other Y-axis end (i.e., the bottom end of the image in Fig. 7A) in the direction parallel to the X-axis in step S104.

Using the brightness distribution diagram thus prepared, the projection position detecting unit 84 detects the projection position of the slit light 40 in each of the images 10 in step S105. The projection position detecting unit 84 outputs the information on the detected projection position to the three-dimensional shape measuring unit 85. Based on the projection position of the slit light 40 in each of the images 10, the three-dimensional shape measuring unit 85 measures the three-dimensional shape of the workpieces 3 in step S106. The three-dimensional shape measuring unit 85 determines the positions and postures of the workpieces 3 to output the determination result to the task commanding unit 86.

Based on the positions and postures of the workpieces 3, the task commanding unit 86 determines whether there exists a grip target workpiece 3 in step S107. If it is determined that the grip target workpiece 3 does exist (if yes in step S107), the task commanding unit 86 selects the grip target workpiece 3 in step S108.

Then, the task commanding unit 86 outputs to the robot 7 a workpiece grip command instructing the robot 7 to take out the selected grip target workpiece 3 from the placement region 2 in step S109. Thereafter, the processing is returned to step S103. On the other hand, if it is determined in step S107 that the grip target workpiece 3 does not exist (if no in step S107), the task commanding unit 86 completes the processing.

As set forth above, the robot system 1 according to the present embodiment shortens the measuring time of the three-dimensional shape of the workpiece 3 and enhances the measuring accuracy thereof by optimizing the estimated projection region 11 of the slit light 40 in conformity with the shape of the slit light 40 in the image 10. With the robot system 1 in accordance with the present embodiment, it is therefore possible to increase the speed and accuracy of picking up the workpiece 3 performed by the robot 7.

When the estimated projection regions 11 differing in the X-axis direction length (width) from one another are set in the respective images 10, the estimated projection region determining unit 83 may not perform the pre-scan and may determine the estimated projection regions 11 using a function in which the width of the estimated projection regions 11 is changed depending on the X-axis direction position of the slit light 40 in the respective images 10 registered in advance. This makes it possible to reduce the amount of the estimated projection region information 92 stored in the storage unit 9.

If the length (width) of the slit light 40 in the direction parallel to the X-axis grows larger as the projection position of the slit light 40 comes closer to the X-axis direction center of the placement region 2, the amount of the slit light 40 may be made smaller as the projection position comes closer to the center of the placement region 2.

This makes it possible to keep the width of the slit light 40 uniform regardless of the projection position of the slit light 40 in the placement region 2. Accordingly, the projection position of the slit light 40 can be detected through the use of one kind of estimated projection region 11 by merely changing the set position of the estimated projection region 11.

Based on the estimated projection region 11 from which the projection position of the slit light 40 is detected by the projection position detecting unit 84, the estimated projection region determining unit 83 may determine the estimated projection region 11 from which the next projection position of the slit light 40 is detected by the projection position detecting unit 84.

For example, based on the position of the estimated projection region 11 in the image and the speed of the slit light 40 moving along the placement region 2, the estimated projection region determining unit 83 may sequentially determine the estimated projection regions 11 in the images 10 from which the next projection positions of the slit light 40 are detected by the projection position detecting unit 84. With this configuration, it is possible to reduce the amount of the estimated projection region information 92 stored in the storage unit 9.

Based on the projection position of the slit light 40 detected by the projection position detecting unit 84, the estimated projection region determining unit 83 may determine the estimated projection region 11 from which the next projection position of the slit light 40 is detected by the projection position detecting unit 84. With this configuration, it is equally possible to reduce the amount of the estimated projection region information 92 stored in the storage unit 9.

Other effects and other modified examples can be readily derived by those skilled in the art. For that reason, the broad aspect of the present disclosure is not limited to the specific disclosure and the representative embodiment shown and described above. Accordingly, the present disclosure can be modified in many different forms without departing from the scope defined by the appended claims and the equivalents thereof.

## Claims

1. A robot system, comprising:
a projecting unit for projecting a slit light on a specified placement region loaded with a work and for moving the slit light in a specified moving direction;
an imaging unit for imaging, a number of times, the slit light moving on the work loaded on the placement region;
an estimated projection region determining unit for determining an estimated projection region such that the estimated projection region extends across an image taken by the imaging unit in an intersection direction intersecting the moving direction and such that the length of the estimated projection region in a direction substantially parallel to the moving direction grows larger toward the center of the image in the intersection direction;
a projection position detecting unit for detecting a projection position of the slit light within the estimated projection region; and
a robot for gripping the workpiece based on the projection position detected by the projection position detecting unit.

2. The robot system of claim 1, wherein the estimated projection region determining unit is configured to determined the estimated projection region such that the length of the estimated projection region in a direction substantially parallel to the moving direction grows larger as the estimated projection region comes closer to the center of the image in the moving direction.

3. The robot system of claim 1 or 2, wherein the projection position detecting unit is configured to detect the projection position of the slit light based on a brightness distribution diagram of the slit light in the estimated projection region.

4. The robot system of any one of claims 1 to 3, wherein the estimated projection region determining unit is configured to determine the estimated projection region based on an image of the slit light projected on the placement region not loaded with the workpiece.

5. The robot system of any one of claims 1 to 4, wherein, based on the estimated projection region from which the projection position of the slit light is detected by the projection position detecting unit, the estimated projection region determining unit determines an estimated projection region from which the next projection position of the slit light is detected by the projection position detecting unit.

6. The robot system of claim 1, wherein, when the length of the estimated projection region in a direction substantially parallel to the moving direction is set differently along the moving direction in the image, the estimated projection region determining unit determines the estimated projection region using a function in which the width of the estimated projection regions is changed depending on a moving direction position of the slit light in an image registered in advance.

7. The robot system of any one of claims 1 to 6, wherein, when the length of the slit light in the direction substantially parallel to the moving direction of the slit light grows larger as the projection position of the slit light comes closer to a moving direction center of the placement region, the projecting unit makes the amount of the slit light smaller as the projection position comes closer to the center of the placement region.

8. The robot system of any one of claims 1 to 4, wherein, based on the projection position of the slit light detected by the projection position detecting unit, the estimated projection region determining unit determines an estimated projection region from which the next projection position of the slit light is detected by the projection position detecting unit.

9. The robot system of any one of claim 1 to 8, wherein the intersection direction is a direction intersecting the moving direction by a substantially right angle.
